# EUROPEAN PATENT APPLICATION

(11) **EP 2 420 451 A1**
(43) Date of publication of application: **22.02.2012**
(21) Application number: 10013888.2
(22) Date of filing: 22.10.2010
(51) Int. Cl.: B65D 19/30

(54) **Load bearing structure**

(30) Priority: 16.08.2010 US 856708
(71) Applicant: Moore, Steve, Innovation Way, Europarc Grimsby North East Lincolnshire DN37 9TT (GB); Ridlington, Steve, Innovation Way, Europarc Grimsby North East Lincolnshire DN37 9TT (GB)
(72) Inventor: Moore, Steve, Innovation Way, Europarc Grimsby North East Lincolnshire DN37 9TT (GB); Ridlington, Steve, Innovation Way, Europarc Grimsby North East Lincolnshire DN37 9TT (GB)
(74) Representative: Franks & Co Limited

(57) **Abstract**

A load - bearing structure (10) for transporting or storing a load is disclosed. The structure includes at least one load - bearing surface (20) and at least one support member (40). The or each of a plurality of support members (40) is disposed at least about the periphery of the load - bearing surface (20) and extends substantially downward relative to the load - bearing surface (20). The or each of a plurality of support members (40) defines a peripheral channel (80) about the load - bearing surface (20), which is apt to accommodate at least a portion (40, 110) of a substantially same load - bearing structure (10). The load - bearing surface (20) and the or each support member (40) are made from a substantially rigid material.

## Description

### Field of the Invention

The present invention relates to improvements in load-bearing handling and/or shipping structures. More particularly, the present invention relates to improvements in handling and/or shipping pallets.

### Background to the Invention

The use of load-bearing structures such as pallets and trays is well known in logistics systems, and many different types of pallet-like structures are known, on which to load goods for transport and/or storage operations.

Typically, a pallet-like structure comprises a load-bearing surface and a number of support members extending downwardly from the load-bearing surface, which maintain the load-bearing surface at a distance from the ground, another pallet or, in some instances, palletized goods, upon which it rests.

Most conventional pallets are made of wood. Traditional disadvantages of wooden pallets are well known in the art and are essentially associated with environmental conditions, wherein moisture can cause an increased unladen weight of a wooden pallet, and eventually causes wooden pallets to swell, warp, and facilitate the growth of fungus and bacteria in the wood acting as a substrate. For these reasons, wooden pallets now often require additional processing before use, for instance heat treatment and bacterial certification. Other disadvantages are inherent to the material of construction, which is highly combustible and represents a fire hazard under adverse circumstances, Wooden pallets are also prone to splintering and structural failure in case of shocks during handling by specialist handling machinery, such as forklift trucks.

Recent developments in the configuration of pallets have seen the introduction of plastic or thermoplastic pallets, which are generally lighter than their wooden equivalent and, advantageously, suitable for re-use. Plastic pallets are less prone to environmental contamination and are more easily cleaned after each use. Further, several types of plastic pallets are known to include features which facilitate their stacking, either in use or for storage purposes when not in use.

However, remaining disadvantages of plastic pallets are again inherent to their material of construction, since plastic is inherently resilient to a greater or lesser extent depending on its density, and therefore provides a lesser weight-bearing capacity relative to wooden pallets. This disadvantage may be overcome to some extent, by producing plastic pallets with an increased density, however this results in an increased unladen unit weight, which eventually proves uneconomical relative to the use of traditional wooden pallets.

Unlike wooden pallets, plastic pallets can become very brittle when used in cold environments, arising from climatic conditions or specific use such as refrigerated storage. Just like wooden pallets, plastic pallets remain prone to structural failure in case of increased brittleness and/or shocks during handling by specialist handling machinery, such as forklift trucks.

In parallel with the development of alternative materials for pallets, the growing specialization of logistical services and systems has resulted in an increasing multitude of industry-specific pallet types and standards. Two recent sub-types of pallets include rackable pallets and nestable pallets.

Rackable pallets are those which are apt for locating and storing goods on racking rails in a warehousing system, and typically require a full perimeter base to ensure the steady positioning and even distribution on the total load on several racking rails adjacent one another.

Nestable pallets are those apt to nest at least partially inside one another when not laden with goods, having a combination of apertures in their top face and feet projecting from their bottom face and configured to engage respective apertures in the top face of an underlying pallet, to ensure minimal volume requirements for transport and/or storage of unladen pallets.

A disadvantage is that the respective features of the nestable feet of a nestable pallet, and the full perimeter base of a rackable pallet are inherently incompatible.

What is therefore required is an improved pallet design made of a substantially rigid material, more shock - resistant than wood or plastic materials and their derivatives, but which is still relatively light in weight and which is moreover suitable for any of conventional, nesting and racking applications.

### Summary of the Invention

According to a first aspect of the present invention, there is provided a load - bearing structure for transporting or storing a load, comprising at least one load - bearing surface and at least one support member, wherein the load - bearing surface and the at least one support member are made from a substantially rigid material, characterised in that the at least one support member is disposed about the periphery of the load - bearing surface and extends substantially downward relative to the load - bearing surface, and at least one support member defines a peripheral channel about the load - bearing surface, apt to accommodate at least a portion of a substantially same load - bearing structure.

Preferably, a plurality of support members are disposed about the periphery of the load - bearing surface, wherein the plurality of support members defines the peripheral channel about the load - bearing surface apt to accommodate the at least portion of the substantially same load - bearing structure.

Preferably, at least some of the plurality of support members are disposed substantially equidistant from one another about the periphery of the load - bearing surface.

Preferably, the load - bearing structure further comprises at least one support member located substantially at the geometrical centre of the load - bearing surface. The further at least one support member may advantageously define a central well in the load - bearing surface. Preferably, the load - bearing structure comprises a further support member located substantially at the geometrical centre of the load - bearing surface, being co-axial and substantially perpendicular relative to the first support member located substantially at the geometrical centre of the load - bearing surface.

The central support member or members improve the load-bearing capacity of the pallet since, regardless of whether pallets are laden with goods or unladen in a stack, the central support member or members provide a central weight distribution point for relieving the mechanical stress applied by the load, or superposed pallet or pallets, to the load - bearing surface within the periphery thereof. The central well is particularly useful in that it allows a user to automatically center each successive pallet relative to an underlying pallet when stacking a plurality thereof. The central support member or members defining the central well of a superposing pallet slide within the central well of an underlying pallet in the stack. The central support member or members of the underlying pallet advantageously level the superposed pallet relative to the underlying pallet, in a configuration which achieves both a stacking and nesting effect.

Preferably, at least one side of each support member extending from the load - bearing surface has a main axis forming an angle relative to the load bearing surface.

Preferably, the or each support member has a substantially polygonal shape, having at least one apex substantially lower than the plane of the load - bearing surface. The polygonal shape is preferably a triangle, selected from the group comprising equilateral, isosceles, scalene, right, oblique, acute and obtuse triangles.

Preferably, the load - bearing structure further comprises at least one skid or runner member connected to at least the or each support member disposed about the periphery of the load - bearing surface. The at least one skid or runner member may advantageously define a peripheral runner member, having a main plane substantially parallel to the main plane of the load - bearing surface. The peripheral runner member is particularly useful, in that it allows a user to automatically center each successive pallet relative to an underlying pallet when stacking a plurality thereof, since the peripheral runner member is guided within the underlying peripheral channel defined by the plurality of support members.

Alternatively, the load - bearing structure further comprises at least two skid members connected to at least some of the plurality of support members, and respectively disposed on at least two opposed sides of the load - bearing structure.

The at least one or each skid member may advantageously be connected to apices of the polygonal shape.

Preferably, the or each support member of the load - bearing structure is further configured with an abutting member, against which the at least portion of the substantially same load - bearing structure rests. The abutting member may advantageously be substantially transversal and located between sides of the or each support member. Advantageously, the bracing members of an underlying pallet level the superposed pallet relative to the underlying pallet, whereby weight is evenly distributed in a stack thereof.

Preferably, the load - bearing surface is a mesh.

Preferably, the rigid material is substantially metallic. The rigid material may advantageously be selected from the group comprising aluminium, stainless steel and mild steel. The rigid material may advantageously be mild steel, and further plated, coated or galvanised with zinc and/or another material.

Preferably, the load - bearing structure comprises a data carrier having machine - readable data encoded or recorded thereon, wherein the data at least uniquely identifies the load - bearing structure amongst all other load - bearing structures. Advantageously, identifying each distinct pallet, for instance with a unique identifier encoded in a barcode, smart code or RFID device permanently affixed thereto, facilitates their use within logistics systems and environments and, in particular, the individual tracking of pallets for logistical, cleaning and sterilisation processes.

Preferably, the load - bearing structure is colour - coded in any colour or combination of colours according to at least one criteria selected from the group comprising load - bearing structure use, load - bearing structure transport type, load - bearing structure load type, load - bearing structure type by dimension or weight. Advantageously, colour - coding pallets according to use, transport, load type and/or structure type simplifies their identification, handling and re-use within logistics systems.

According to another aspect of the present invention, there is provided a method of manufacturing a load - bearing structure comprising at least one load - bearing surface and a plurality of support members, the method comprising the steps of cutting a plurality of individual lengths of wire in pre-measured lengths, placing the plurality of individual lengths of wire in a jig, fastening the plurality of individual lengths of wire to one another, so that at least some of the plurality of individual lengths of wire form the at least one load - bearing surface and at least some others of the plurality of individual lengths of wire form the plurality of support members extending about the periphery of the load - bearing surface, and bending the spot - welded plurality of individual lengths of wire forming the plurality of support members so that they define a peripheral channel about the load - bearing surface apt to accommodate at least a portion of a substantially same load - bearing structure.

The step of fastening may be performed by spot - welding fastening the plurality of individual lengths of wire to one another.

Preferably, the method comprises the further step of pre-forming the plurality of individual lengths of wire forming the plurality of support members before spot - welding same to the plurality of individual lengths of wire forming the at least one load - bearing surface.

Preferably, the method comprises the further step of bending at least one individual length of wire into a full perimeter shape, in order to reduce the number of welds required to make a shape having a full perimeter.

Preferably, the method comprises the further steps of subjecting the load - bearing structure to an acid bath, and of plating, coating or galvanising the load - bearing structure with zinc and/or another material.

Preferably, the plurality of individual lengths of wire used in the method have a substantially uniform gauge or section. Alternatively, the plurality of individual lengths of wire used in the method have varying gauges or sections.

Preferably, the wire used in the method is selected from the group comprising aluminium, stainless steel and mild steel wire.

According to a further aspect of the present invention, there is provided a method of cleaning a load - bearing structure, wherein the load - bearing structure comprises at least one load - bearing surface and one or support members defining a peripheral channel about the load - bearing surface, the method comprising the steps of : stacking a plurality of substantially same load - bearing structures, wherein the peripheral channel of a load - bearing structure accommodates at least a portion of a superposed load - bearing structure ; loading the stack of load - bearing structures in an automated washing apparatus; and subjecting the plurality of load - bearing structures to a washing sequence.

Preferably, the washing sequence includes hot - soaking, pre - washing, rinsing, hot - washing and rinsing the plurality of load - bearing structures.

Preferably, the method comprises the further step of subjecting the plurality of load - bearing structures to a sterilising process.

The sterilising step preferably includes at least one selected from, or a combination of, the administration of one or more chemical sterilising agent, in the gaseous phase or otherwise, to the plurality of load - bearing structures, the exposure of the plurality of load - bearing structures pallet to one or more sources of UV light, and the heating of the plurality of load - bearing structures to an ambient temperature of at least 100 degrees Celsius.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 is an isometric view of a first embodiment of a pallet according to the present invention.
Figure 2 is a bottom plan view of the embodiment shown in Figure 1.
Figure 3 is a side elevation of the embodiment shown in Figures 1 and 2.
Figure 4 is an end elevation of the embodiment shown in Figures 1 to 3.
Figure 5 is a bottom plan view of a second embodiment of a pallet according to the present invention.
Figure 6 is a side elevation of the embodiment shown in Figure 5.
Figure 7 is a side elevation of several pallets according to either of the embodiments respectively shown in Figures 1 to 4 and Figures 5 and 6, nested into and stacked on top of one another.
Figure 8 is a top plan view of several pallets according to either of the embodiments respectively shown in Figures 1 to 4 and Figures 5 and 6, disposed in a racking structure.
Figure 9 shows both a side and an end elevation of the racking structure shown in Figure 8.
Figure 10 is an isometric view of the racking structure shown in Figures 8 and 9.

### Detailed Description

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

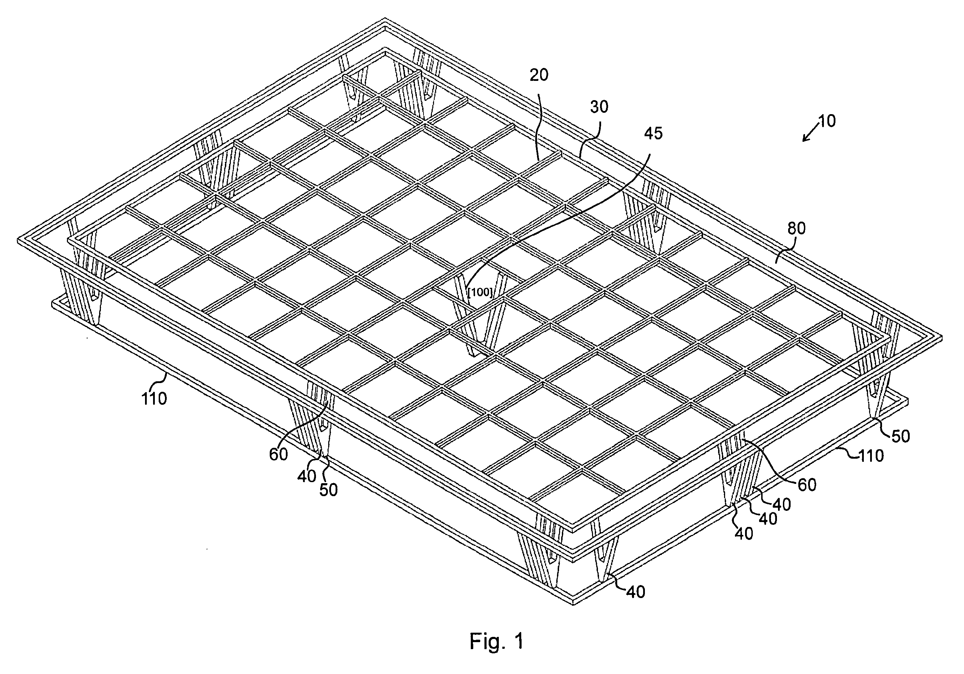

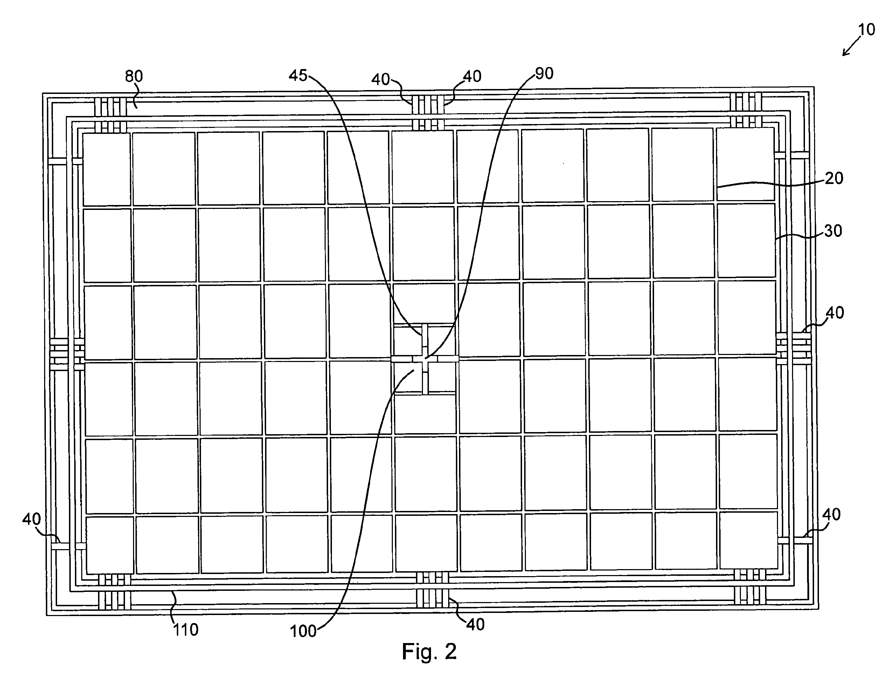

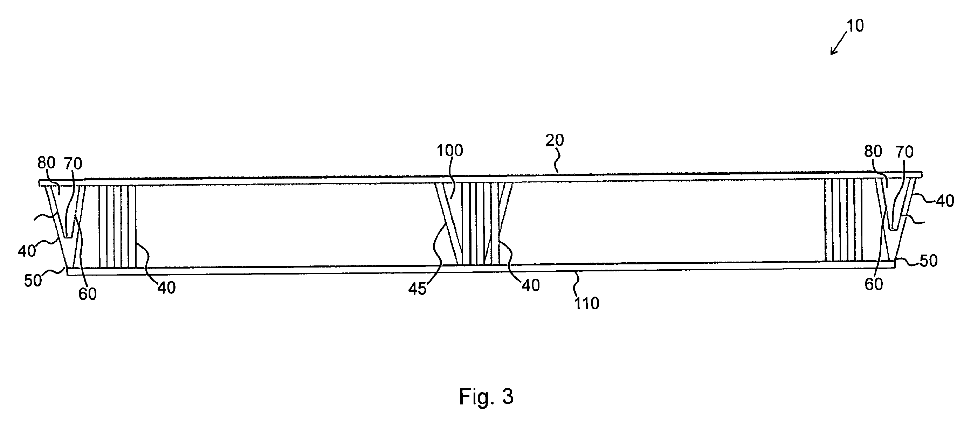

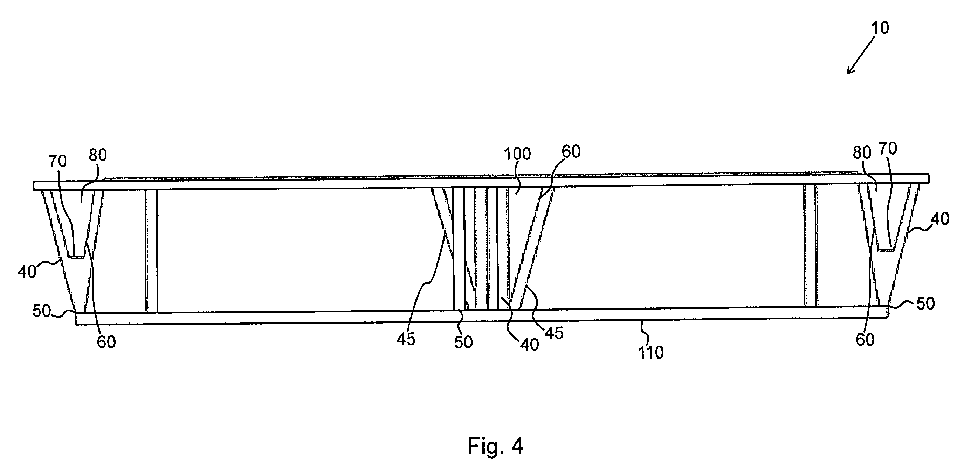

With reference to Figures 1 to 4, a pallet 10 is shown according to a first embodiment of the invention. The pallet 10 comprises a load-bearing surface 20 which, in this embodiment, takes the form of a mesh constructed from metallic wire. The mesh 20 is substantially oblong, having a closed periphery 30.

The pallet 10 further comprises a plurality of support members 40, wherein each support member 40 is disposed about the periphery 30 of the load-bearing surface 20, substantially equidistant from one another. Each support member 40 extends substantially downward relative to the load-bearing surface 20. Each support member 40 is substantially identical to the other support members 40 and is substantially polygonal, having at least one apex 50, which is substantially lower than the plane of the load-bearing surface 50.

Persons skilled in the art will readily understand that the plurality of support members 40 may be substituted for a single support member 40. For instance, the single peripheral support member 40 may be made from sheet metal and be correspondingly shaped, folded or stamped so as extend substantially downward relative to the load-bearing surface 20, be substantially polygonal and have at least one apex 50 substantially lower than the plane of the load-bearing surface 50.

At least one side 60 of each support member 40 extends from the load-bearing surface 20, and in this embodiment from the periphery 30 of the load-bearing surface 20. Each such side 60 forms an angle relative to the load-bearing surface 20, wherein the angled side 60 optionally acts as a guiding surface, for a corresponding support member 40 or a skid or runner member 110 of a superposed pallet 10 to abut and slide along.

The support member 40 in this embodiment is shaped substantially as an isosceles triangle, one equal side of which corresponds to the side 60 extending from the periphery 30 of the load-bearing surface 20.

Persons skilled in the art will readily understand that the polygonal shape described above may be substituted for alternative polygonal shapes apt to achieve the same purpose, without departing from the scope of the disclosure.

A transversal bracing member 70 extends between the two sides of the support member 40, which forms an abutting surface for the apex 50 of a corresponding support member 40, or the skid or runner member 110, of a superposed pallet 10 to rest upon.

The plurality of substantially identical support members 40 are aligned with one another along each side of the pallet 10, whereby the plurality of support members 40 defines a peripheral channel 80 about the load-bearing surface 20, having a maximum width corresponding to the distance between the equal sides of the support members 40 in a plane substantially co-planar with the load-bearing surface 20, and a depth corresponding to the distance between the plane of the load-bearing surface 20 and the transversal bracing member 70 of each support member 40.

At least some of the support members 40 are disposed proximate one another, in order to improve the structural strength of the pallet structure 10. In the embodiment shown in Figures 1 to 4, some of the support members 40 disposed about the load - bearing surface are grouped by three, the structure having three equidistant such groups along each longer side of the rectangular structure and, along each shorter side of the rectangular structure, having one such group in the middle, flanked by a single support member 40 on either side, equidistantly.

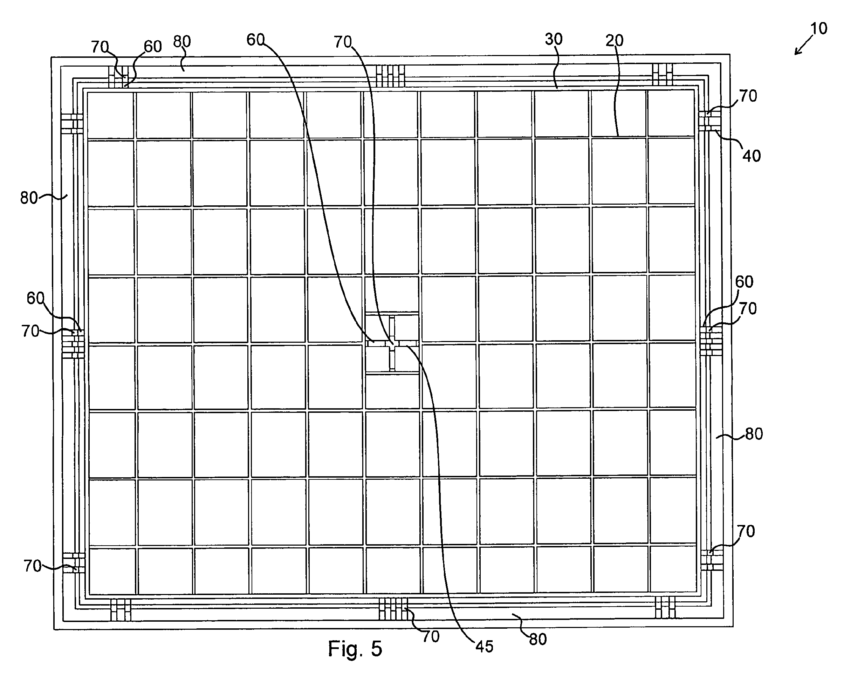

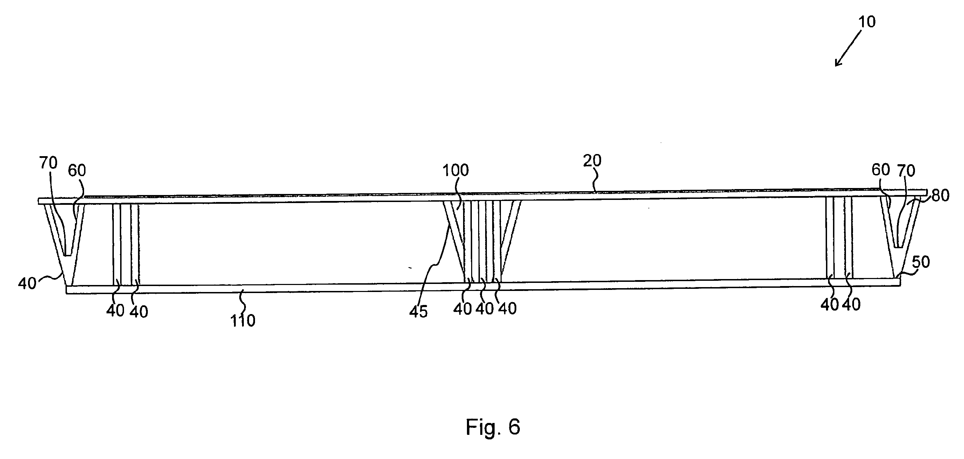

An alternative embodiment is shown in Figures 5 and 6, wherein some of the support members 40 disposed about the load - bearing surface are again grouped by three, yet others are grouped in pairs, the structure having one group of three support members 40 located substantially at the middle of each side of the structure, each such group being flanked by a pair of support members 40 on either side, equidistantly.

It will be readily understood by persons skilled in the art that many further alternative embodiments may be based on this principle, for instance wherein all support members 40 are disposed substantially equidistant from one another about the periphery of the load - bearing surface 20, or as a function of the material of construction and inherent strength of same.

In order to improve the load-bearing capacity of the pallet 10, two further support members 45 may be located substantially at the geometrical center 90 of the load-bearing surface 20 or pallet 10. The two further support members 45 are substantially and respectively co-axial with respective median axes of the load-bearing surface 20, each of which extends between two opposed sides of the pallet. In this configuration, the two further support members 45 are substantially perpendicular to one another and share a common apex 55 located substantially at the geometrical center 90 of the load-bearing surface. The two further support members 45 define a central well 100 projecting downward from the load-bearing surface 20, having a maximum width corresponding to the distance between the respective equal sides of each of the two perpendicular support members 40 in a plane substantially co-planar with the load-bearing surface 20, and a depth corresponding to the distance between the plane of the load-bearing surface 20 and the respective transversal bracing member 75 of each support member 45.

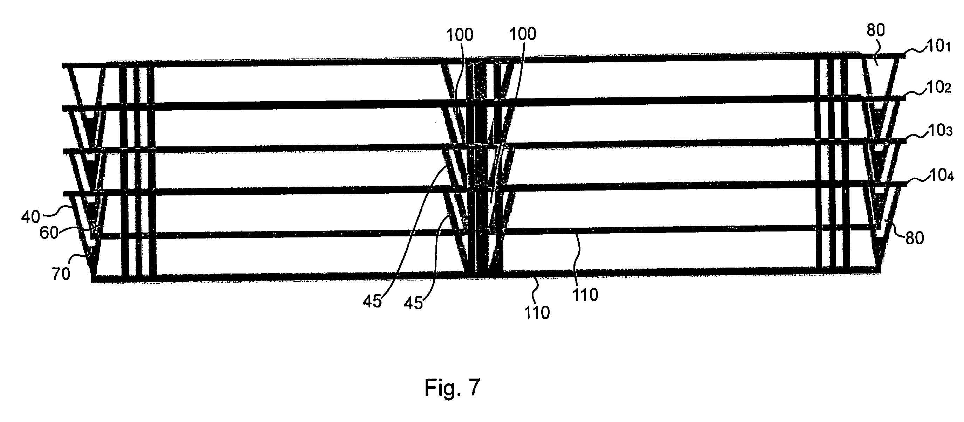

With reference to Figure 7, the central well 100 is particularly useful in that it allows a user to automatically center each successive pallet 10 relative to an underlying pallet 10 when stacking a plurality thereof. The support members 45 of a central well 100 of a superposing pallet slide within the underlying central well 100 defined by the two support members 45 of an underlying pallet 10 in the stack, until their apex 55 abut the respective bracing members 75 of the two underlying support members 45. The respective bracing members 75 of the underlying pallet 10 advantageously level the superposed pallet 10 relative to the underlying pallet 10, in a configuration which achieves both a stacking and nesting effect.

Moreover, regardless of whether pallets 10 are laden with goods or unladen in a stack, the two central support members 45 provide a central weight distribution point for relieving the mechanical stress applied by the load, or superposed pallet or pallets, to the load - bearing surface 20 within the periphery 30 thereof.

The pallet 10 further comprises a skid or runner member 110, which is connected to a plurality of support members 40, 45, substantially at the respective lowest apices 50, 55 thereof. In the embodiment shown, the runner member 110 is connected to each of the plurality of peripheral support members 40 and therefore defines a peripheral runner, having a main plane substantially parallel to the plane of the load-bearing surface 20 and which is substantially perpendicular to the respective main plane of each support member 40. Persons skilled in the art will readily envisage alternatives comprising a plurality of runners, for instance two runners extending along only two opposed sides of the pallet 10, preferably the longest opposed sides, or a plurality of discrete runners extending between some of the plurality of support members 40 in an alternating arrangement, and still further variations without departing from the scope of the disclosure.

With reference to Figure 7 still, the runner member 110 is also particularly useful when pallets 10 are unladen, in that it allows a user to automatically center each successive pallet 10 relative to an underlying pallet 10 when stacking an plurality thereof. In particular, the peripheral runner member 110 is guided by the side 60 of each support members 40 of an underlying pallet 10 in the stack, within the underlying peripheral channel 80 defined by the plurality of support members 40, until the runner member 110 abuts the respective bracing members 70 of the plurality of support members 40. The respective bracing members 70 of the underlying pallet 10 advantageously level the superposed pallet 10 relative to the underlying pallet 10, whereby weight is evenly distributed in a stack thereof.

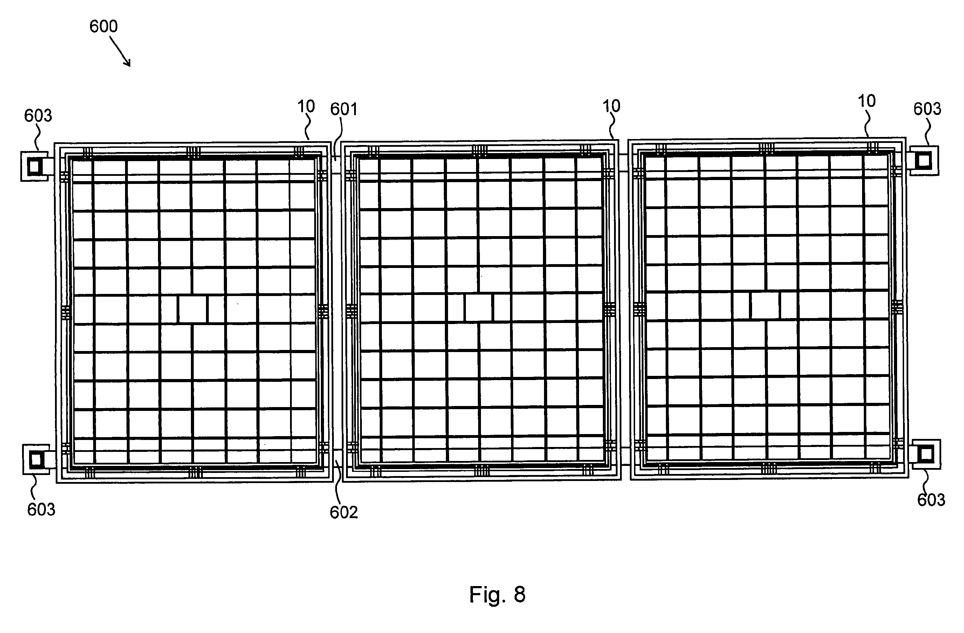

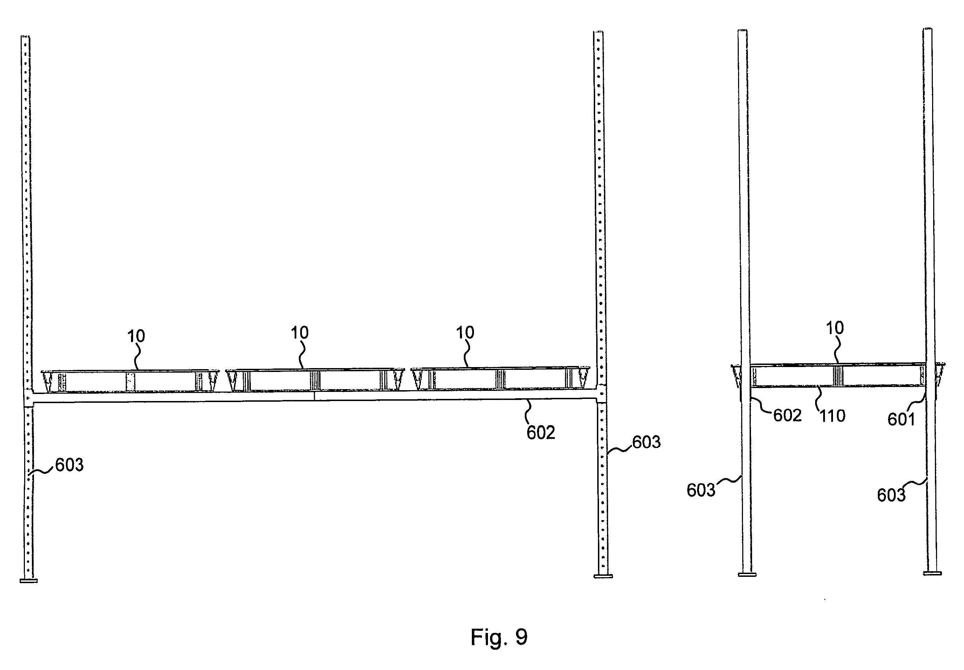

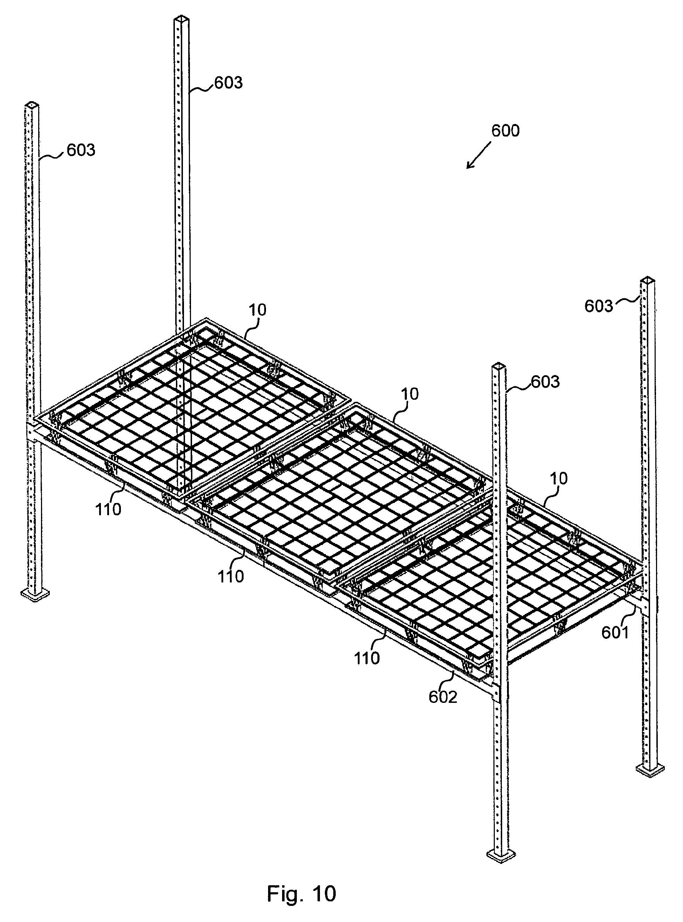

With reference to Figure 8 to 10, the runner member 110 is particularly useful when laden pallets 10 are intended for use on racking rails 601, 602 of a warehousing rack structure 600. The rack structure 600 is a typical implementation of a temporary or permanent goods storage or warehousing system, consisting of four uprights 603 delineating a substantially oblong storage area, and a pair of substantially parallel rails 601, 602 releasably attached to respective pairs of uprights 603 at a same height relative to one another. Depending on the design and material constraints of the rack structure 600, the uprights 603 may carry further pairs of substantially parallel rails (not shown for not unnecessarily obscuring the description and Figures), higher or lower relative to rails 601, 602.

If a pallet having only partial, lateral or parallel runners is first picked up from a transport, container or the like, then the user may need to temporarily place the pallet on the ground, disengage the forklift pines from same, then reengage the forklift pines in the pallet at 90 degrees relative to the earlier pallet carrying orientation, for changing the orientation of the pallet's partial, lateral or parallel runners relative to the racking rails 601, 602.

Each pallet 10 carries goods on its load - bearing surface 20 (shown empty for not unnecessarily obscuring the description and Figures), and the peripheral runner member 110 allows a user to easily and steadily position each pallet 10 on the pair of rails 601, 602, regardless of the pallet orientation whilst it is being carried, by a forklift truck or similar handling apparatus, from an earlier transport or storing location. Further, the peripheral runner member 110 facilitates the even distribution on the total load, consisting of a pallet 10 and its load, across the racking rails 601, 602. Advantageously, the user does not require careful consideration of whether a partial or lateral runner is resting correctly on each rail 601, 602 before disengaging the forklift pines from the pallet.

The pallet 10 is fabricated from steel wire in a purpose - built jig, into which individual lengths of wire, cut in pre-measured lengths, are placed. The individual lengths of wire are straightened and spot - welded to one another, then bent to form the angled joints between the load - bearing surface 20 and the support members 40, 45 and to form the angle between respective sides of each support member 40, 45. The spot welding operation is preferably automated, for instance on a robotic assembly line, in order to ensure speed, accuracy and consistency of welds. After assembly, the pallet 10 is subjected to an acid bath, then plated, coated or galvanised with zinc and/or another material.

Alternative embodiments consider alterating the sequence of steps, to bend the wires first, then spot weld them to one another, as well as adapting the jig to receive pre-formed wire elements, for instance pre-formed support members 40, 45 and/or runner members 110, and only performing the spot - welding operation. Likewise, persons skilled in the art may easily implement an embodiment wherein straight lengths are bent into full perimeter shapes, having rounded corners, so that the number of welds required to make a specific shape is substantially reduced, e.g. from four welds down to one in the case of a substantially square shape. Further alternative embodiments consider the use of alternative materials to plated or coated metal, for instance stainless steel or aluminium.

Pallets 10 may be produced with lengths of wire having a substantially uniform gauge or section, and moreover wherein the gauge or section may vary from a relatively thin diameter to a relatively thick diameter, resulting in pallets 10 of varying unladen weight and tensile strength. Likewise, pallets 10 may be produced with lengths of wire having differing gauges or sections, combining wires with a relatively thin diameter and wires with a relatively thick diameter, again resulting in pallets 10 of varying unladen weight. Lighter embodiments are particularly useful in transport systems wherein weight of the load - bearing support, such as a pallet 10, is critical, for instance airfreight.

Still further alternative embodiments consider the use of alternative materials to metal, steel and aluminium, whereby the jig may be replaced by a mould or the like suitable for forming a pallet 10 by way of a moulding or extrusion process or the like as an integral structure.

A pallet 10 is re-usable after a first use, and a method is provided to clean and optionally sterilise the pallet, which is particularly advantageous for foodstuff and pharmaceutical loads.

Pallets 10 are delivered by transporter, preferably as part of a backload and in batches of 75 to 100 pallets 10 nested into one another as previously described, and taking up one pallet space on a transporter, to a washing facility. The pallets 10 arrive without protective sleeves or shrink wrap, as they are contaminated from their first or preceding use, whereby there is no requirement for any environmental protection. Pallets are unloaded from the transporter and stored until a washing slot is available. Pallets are then moved from the inward storage area to an automated washing machine and placed therein, in batches of 50 to 100.

For the purpose of not unnecessarily obscuring the present disclosure, such automated washing machines are essentially similar, functionally, to domestic washing machines, in that they implement wash cycles with a duration of one to two minutes depending on pallet soilage. A typical wash cycle includes a pallet hot soak, pre-wash, rinse, fully heated wash followed by a sanitising rinse.

The automated washing machine may be further adapted to sterilise the pallet batch as part of the wash cycle, or subsequently thereto, or the cleaned pallets may be subjected to a sterilisation process in a distinct apparatus upon removal from the automated washing machine at the end of the wash cycle. The sterilisation process within the automated washing machine or a distinct apparatus is preferably according to any known technique including the administration of one or more chemical sterilising agent, in the gaseous phase or otherwise, to a pallet batch, and/or the exposure of the pallet batch to one or more sources of UV light, and/or the heating of the pallet batch to an ambient temperature of at least 100 degrees Celsius. The cleaning and sterilising methods are preferably in full conformance and adherence to the ISO 22000 standard.

Cleaned and optionally sterilised pallets 10 are subsequently moved to a clean room for quality-testing, by selecting one or more pallets of a batch at random and swab testing same according to known techniques. Quality - tested pallets 10 are then conditioned in protective sleeves or shrink-wrap in stacks of 100 pallets and date - batched, and optionally affixed with a visual indicator of their status, for instance a sticker verifying the completion of the quality test or control. Conditioned pallets 10 are subsequently moved to a dispatch area for transporting to end customers. On collection of the pallets 10 from a washing facility, the transporter is issued with a report confirming the clean and optionally sterilised status of the conditioned pallets to transport to an end customer. The report may double as a consignment note for proof of collection.

In a particularly advantageous embodiment, each pallet 10 further includes machine - readable data encoded thereon or therein, for instance in the form of a barcode, smart code or RFID device permanently affixed thereto, to facilitate their use within logistics systems and environments and, in particular, the individual tracking of pallets 10 for logistical, cleaning and sterilisation processes. It will be readily understood by skilled persons that any numerical alphanumerical or optical data may be encoded for any particular use, transport type, load type and/or pallet type by dimension or weight, so long as it at least uniquely identifies a pallet 10 amongst a plurality thereof.

Every facility or user handling pallets 10, from a pallet manufacturer to end users and including washing facilities and logistic service suppliers, is preferably connected to a networked traceability system, in which every pallet 10 in use is recorded and its status is maintained in as real - time as the capture of machine - readable data of respective pallets allows. In a slowest implementation, pallet data is preferably gathered at least daily by every facility or user handling pallets 10. In either context, the use of the above machine - readable data on each pallet 10 facilitates data capture and system update.

Advantageously, this system allows all users to remain informed at all times about their respective stock of pallets 10 and availability of same over time, particularly as reports confirming the clean and optionally sterilised status of conditioned pallets 10 are input into the system by washing facilities when issued, and correlated against respective pallet identification.

In a particularly advantageous embodiment, each pallet 10 is further colour - coded to facilitate re-use within logistics systems and environments and, in particular, the individual identification of pallets 10 for use, cleaning and sterilisation processes. Pallets intended for rental by end users are preferably colour - coded in green. Pallets intended for airfreight use are preferably colour - coded in orange. Pallets requiring sterilisation after each use are preferably colour - coded in white. Combinations of colours are likewise considered, for instance pallets both intended for rental by end users (green) and requiring sterilisation after each use (white) may be coloured in both green and white in a striping pattern. It will be readily understood by skilled persons that any colour or combination of colours may be used for any particular use, transport type, load type and/or pallet type by dimension or weight.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A load - bearing structure (10) for transporting or storing a load, comprising:
at least one load - bearing surface (20); and
at least one support member;
wherein the load - bearing surface (20) and the at least one support member are made from a substantially rigid material;
**characterised in that**
the at least one support member is disposed about the periphery (30) of the load - bearing surface and extends substantially downward relative to the load - bearing surface; and
at least one support member defines a peripheral channel (80) about the load - bearing surface, apt to accommodate at least a portion (40, 110) of a substantially same load - bearing structure (10).

2. A load - bearing structure according to claim 1, comprising a plurality of support members (40) (40) disposed about the periphery (30) of the load - bearing surface (20), wherein the plurality of support members defines the peripheral channel (80) about the load - bearing surface apt to accommodate the at least portion of the substantially same load - bearing structure (10).

3. A load - bearing structure according to claim 2, wherein at least some of the plurality of support members (40) are disposed substantially equidistant from one another about the periphery (30) of the load - bearing surface (20).

4. A load - bearing structure according to any of claims 1 to 3, further comprising at least one support member (45) located substantially at the geometrical centre (90) of the load - bearing surface (20) and defines a central well (100) therein.

5. A load - bearing structure according to any of claims 1 to 4, wherein the or each support member (40, 45) has a substantially polygonal shape, having at least one apex (50, 55) substantially lower than the plane of the load - bearing surface (20).

6. A load - bearing structure according to claim 5, wherein the polygonal shape (40, 45) is a triangle selected from the group comprising equilateral, isosceles, scalene, right, oblique, acute and obtuse triangles.

7. A load - bearing structure according to any of claims 1 to 6, wherein the or each support member is further configured with an abutting member (70, 75), against which the at least portion of a substantially same load - bearing structure (10) rests.

8. A load - bearing structure according to claim 7 when depending on claim 5 or 6, wherein the abutting member (70, 75) is substantially transversal and located between sides of the or each support member (40, 45).

9. A load - bearing structure according to any of claims 1 to 8, further comprising at least one skid member (110) connected to the or each support member (40) disposed about the periphery (30) of the load - bearing surface.

10. A load - bearing structure according to claim 7 9, wherein the at least one skid defines a peripheral runner (110) having a main plane substantially parallel to the main plane of the load - bearing surface (20).

11. A load - bearing structure according to any of claims 1 to 10, wherein the load - bearing surface (20) is a mesh.

12. A load - bearing structure according to any of claims 1 to 11, wherein the substantially rigid material is substantially metallic, being selected from the group comprising aluminium, stainless steel, mild steel, plated metals, coated metals and galvanised metals.

13. A load - bearing structure according to any of claims 1 to 12, further comprising a data carrier having machine - readable data encoded or recorded thereon, wherein the data at least uniquely identifies the load - bearing structure (10).

14. A load - bearing structure according to any of claims 1 to 13, further being colour - coded in any colour or combination of colours according to at least one criteria selected from the group comprising load - bearing structure use, load - bearing structure transport type, load - bearing structure load type, load - bearing structure type by dimension or weight.

15. A method of manufacturing a load - bearing structure (10) comprising at least one load - bearing surface (20) and a plurality of support members (40), comprising the steps of:
cutting a plurality of individual lengths of wire in pre-measured lengths;
placing the plurality of individual lengths of wire in a jig;
fastening the plurality of individual lengths of wire to one another, so that at least some of the plurality of individual lengths of wire form the at least one load - bearing surface (20) and at least some others of the plurality of individual lengths of wire form the plurality of support members (40), each extending about the periphery (30) of the load - bearing surface (20);
bending the plurality of individual lengths of wire forming the plurality of support members so that they define a peripheral channel (80) about the load - bearing surface (20) apt to accommodate at least a portion (40, 110) of a substantially same load - bearing structure (10).

16. A method according to claim 15, comprising the further steps of subjecting the load - bearing structure (10) to an acid bath and of plating, coating or galvanising the load - bearing structure (10).

17. A method of cleaning a load - bearing structure (10),
wherein the load - bearing structure (10) comprises at least one load - bearing surface (20) and one or support members defining a peripheral channel (80) about the load - bearing surface (20),
the method comprising the steps of :
stacking a plurality of substantially same load - bearing structures (10), wherein the peripheral channel of a load - bearing structure (10) accommodates at least a portion (40, 110) of a superposed load - bearing structure (10);
loading the stack of load - bearing structures (10) in an automated washing apparatus; and
subjecting the plurality of load - bearing structures (10) to a washing sequence.

18. A method according to claim 18, comprising the further step of subjecting the plurality of load - bearing structures (10) to a sterilising process.
